# EUROPEAN PATENT APPLICATION

(11) **EP 1 364 865 A2**
(43) Date of publication of application: **26.11.2003**
(21) Application number: 03380108.5
(22) Date of filing: 06.05.2003
(51) Int. Cl.: B62K 9/02

(54) **Child's vehicle**

(30) Priority: 23.05.2002 ES 200201327 U
(71) Applicant: Rodriguez Martinez, S.C., 03440 Ibi, Alicante (ES)
(72) Inventor: Rodriguez Ferre, José Manuel, 03440 IBI (Alicante) (ES)
(74) Representative: Canadell-Isern, Roberto

(57) **Abstract**

**CHILD'S VEHICLE** shaped like a motorized scooter-type tricycle, forming a block made up of two hard plastic material assembled parts shaping the main body that simulates the chassis of the vehicle in which the remaining parts of the vehicle are placed and joined in an integral but temporary way, thus enabling them to be replaced. Said chassis has an axle box (1a) on its front upper part capable of receiving the upper axle (2b) of the forks (2) at slant. Said forks shape the lower part of the front mudguard (2b) and two opposite supports (2c), between which a front wheel (3) is placed that rotates on its corresponding axle. The upper end of the axle (2a) of the forks (2) has an extension (2d) projecting out above the axle box (1a) and is received in a housing located in the lower central zone of a handlebar (4). This has two arms on each side that finish up in handles (4a) and respective mirrors (4b). The union between the axle (2a) and the handlebar (4) is made by screwing (Figures 1 and 2).

## Description

The purpose of this patent Invention request is a child's vehicle that provides for the function for which it is intended various advantages to be detailed later on, apart from others inherent to its organization and constitution.

More specifically, the invention has designed a vehicle that adopts the shape of a motorized scooter-type tricycle, especially conceived so that it can be driven by a child over the age of three years. This vehicle is equipped with an electric motor supplied by rechargeable batteries.

### HISTORY

There are children's vehicles at present on the market consisting in cars, motorbikes and other vehicles supplied by batteries. These constitute cumbersome sets that are very heavy and have a sophisticated assembly.

### DESCRIPTION OF THE INVENTION

The child's vehicle, purpose of this invention includes, as a basic structural element, a body of two parts forming a plastic material monobloc obtained by injection simulating the set of the chassis of a motorized scooter--type tricycle, including the engine and the transmission, the simulated tank and the back wheels of the vehicle and serves as a support for a variety of parts making up the vehicle.

The association of said parts with respect to the basic element serving as their support is made in a simple way by an adult with the help of elemental tools such as a wrench and screwdriver.

The wheels of the vehicle are made of a single plastic part obtained by blowing.

The characteristics of the vehicle of the invention provide, amongst other advantages, a noticeable simplification in the fabrication process that favorably affects the costs, as well as giving said vehicles notable sturdiness, solidity and toughness in order to extend their useful life.

As indicated above, the vehicle purpose of the invention includes a battery and an electric motor connected through a circuit that opens and closes by means of a bipolar switch with three sides operated by an accelerator pedal pressed by the child. An electric brake has been provided so that when the accelerator pedal stops being pressed the vehicle automatically stops. One of the back wheels of the vehicle is operated by a transmission whilst the front wheel controlling the direction is operated by the handlebar controlled by the child.

An arrangement of two plugs connected respectively to the battery of the vehicle and to the wiring of the motor circuit establish the connection between both elements and, when unplugged, permit the battery to be recharged when the plug of the battery is connected to a third plug corresponding to the charger previously connected to the mains.

Assembly of the vehicle is made on the chassis of the handlebar and the front wheel, and a seat covering the battery housing that is easily accessible.

In order to complement the description which follows and to help with a better understanding of the characteristics of the invention, this descriptive report includes a set of drawings in which the most significant details are represented in an illustrative but not limiting way.

### BRIEF DESCRIPTION OF THE DRAWINGS

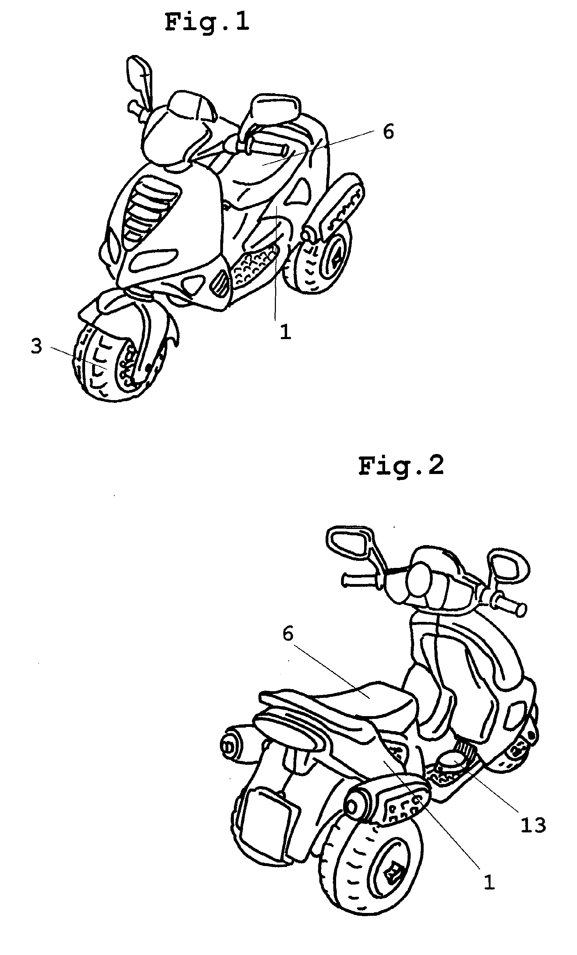

Figures 1 and 2 show perspective front and back views of the assembled vehicle.
Figures 3 to 7 show respective views relating to different assembly stages of the vehicle.
Figures 8 to 10 show views relating to the different stages of exchanging the battery.
Figure 11 shows the vehicle's electrical circuit schematic diagram.
Figures 12 to 16 show illustrative views of how to recharge the vehicle's battery.

### PERFORMANCE EXAMPLE DESCRIPTION OF THE INVENTION

In view of the figures commented above and in accordance with the numbering used, a performance example of the invention can be seen. This consists of a child's vehicle made up of two assembled hard plastic parts constituting the main body -1-, simulating the chassis of the vehicle, on which the remaining parts of the vehicle are placed and joined.

Some parts of the vehicle are structural elements that help to give it the characteristic shape of a motorized scooter-type tricycle, whilst other parts or organs constitute functional elements for the movement, steering and control of the vehicle. In particular, these parts are unitary elements able to be replaced in the event of failure, thus giving the vehicle a practically unlimited useful life.

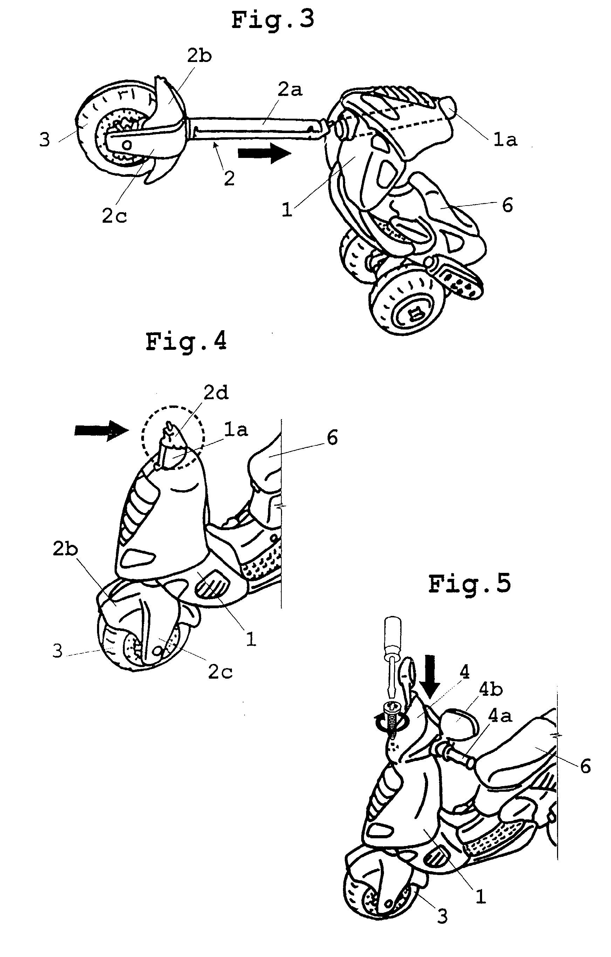

The chassis -1- has an axle box -1a- on its front upper part that receives the upper axle -2a- of forks -2- shaping the lower part of the front mudguard - 2b- and two opposite supports -2c- between which the front wheel -3- is located. This rotates on its corresponding axle, as indicated in figure 3.

The upper end of the axle -2a- of the forks has an extension -2d- projecting out above the axle box -1a- and is received in a housing in the central lower part of a handlebar -4-. This has two arms on both sides that finish up in handles -4a- and respective mirrors -4-b-, in such a way that fastening between axle -2a- and handlebar -4- is made by screwing, as indicated in figures 4 and 5.

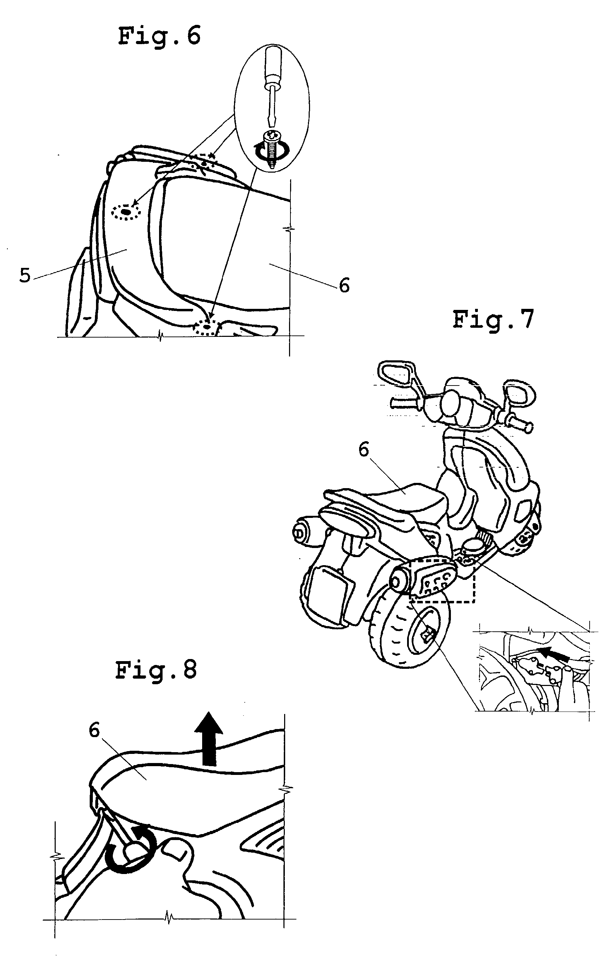

Figure 6 shoes how a protection -5- is fastened by screwing in the chassis -1- zone that surrounds the back part of the seat -6-.

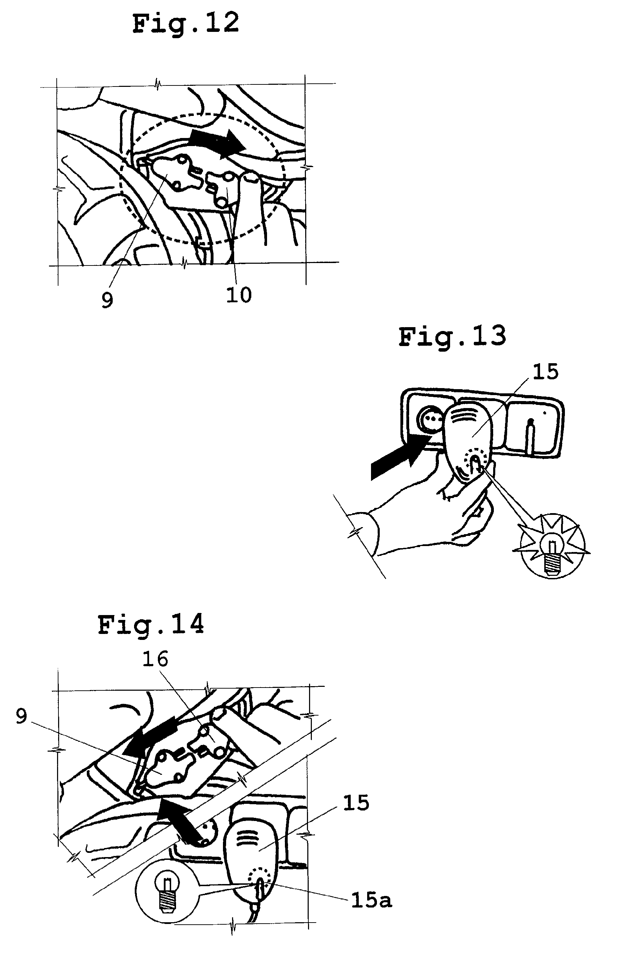

Said seat -6- is fastened to the chassis by screwing and covers a housing for the battery -7-. This is rechargeable in an easily accessible way, as shown in figure 7, and will be described later on as regards figures 12 to 16.

Figures 8 to 10 show renewal of the battery -7- by unscrewing the seat -6- and the screws that fasten the battery -7- in its housing under said seat.

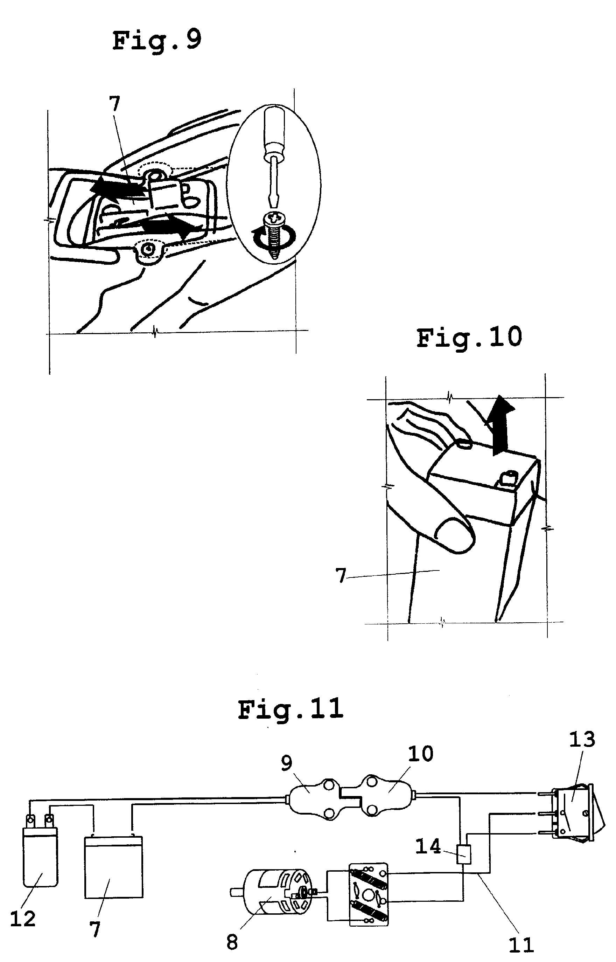

Figure 11 shows the electrical circuit diagram of the vehicle, including the battery -7- and motor -8-; the plug -9- connected to the battery -7- and the plug -10- connected to the wiring -11-, both interconnected in the functional position of the vehicle; the circuit breaker -12-; the accelerator -13- located on the right footrest of the chassis that works on two cutoff buttons of the electrical circuit to allow the electric supply current of the motor -8- to pass through. This, on going through the corresponding transmission, operates the back propelling wheel of the vehicle. Finally, an electric brake -14- that, on lifting the foot off the accelerator -13-, ensures the vehicle automatically stops.

Figures 12 to 16 show recharging of the battery -7-, which is carried out in an easily accessible way through a back side zone of the vehicle.

Figure 12 indicates disconnecting of the plug -9- of the battery -7- from the plug -10- of the wiring -11-.

Figure 12 shows how the charger -15- is connected to the mains.

Figure 14 shows the connection of the plug -16- of the charger -15- to the plug -9- of the battery -7-. The pilot light -15a- of the charger -15- will turn off indicating the battery is being charged, whilst when the pilot light comes on again the battery is charged.

Figure 14 shows how, once the battery -7- is charged, the plug -16- is disconnected from the charger -15- of the vehicle's battery and the charger is disconnected from the mains.

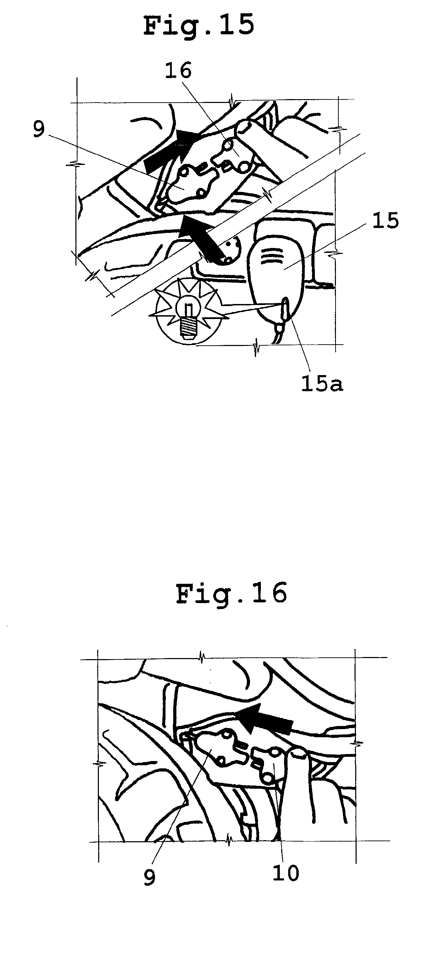

Figure 16 shows connection of the plug -10- of the wiring -11- to the plug -9- of the battery -7-.

Therefore, a first objective of the invention is to obtain a vehicle that faithfully reproduces the shape of a motorized scooter-type tricycle with the advantages of reducing fabrication costs and increasing its sturdiness, thanks to its main body -1- made up of two injected plastic material parts, as well as incorporating front and back wheels made up of a single part obtained by blowing that have the shape of the lining and rim.

A second objective of the invention is to obtain a vehicle intended to be driven by a child, which includes means for its movement, steering, parts similar to the overall design and location of a real vehicle, but sufficient simplified so that they are easily assimilable for a child over three years.

## Claims

1. CHILD'S VEHICLE, of the type shaped like a motorized scooter-type tricycle that includes an electric motor supplied by a rechargeable battery installed in a housing eventually enclosed by the vehicle's seat; an operative accelerator arranged to work on two cutoff buttons of the electrical circuit to operate the motor; an electric brake that stops the vehicle when the foot is taken off said accelerator; and a transmission to move the propelling back wheel of the vehicle. The vehicle is **characterized by** the fact it consists of a block made up of two hard plastic material assembled parts shaping the main body that simulates the chassis of the vehicle in which the remaining parts of the vehicle are placed and joined in an integral but temporary way, thus enabling them to be replaced. Said chassis has an axle box (1a) on its front upper part capable of receiving the upper axle (2b) of the forks (2) at slant. Said forks shape the lower part of the front mudguard (2b) and two opposite supports (2c), between which a front wheel (3) is placed that rotates on its corresponding axle. The upper end of the axle (2a) of the forks (2) has an extension (2d) projecting out above the axle box (1a) and is received in a housing located in the lower central zone of a handlebar (4). This has two arms on each side that finish up in handles (4a) and respective mirrors (4b). The union between the axle (2a) and the handlebar (4) is made by screwing.

2. CHILD'S VEHICLE, according to claim 1, **characterized by** the fact it has been provided with a protection (5) that is fastened by screwing on to the zone of the chassis (1) surrounding the back part of the seat (6).
